# EUROPÄISCHE PATENTANMELDUNG

(11) **EP 4 446 951 A1**
(43) Veröffentlichungstag der Anmeldung: **16.10.2024**
(21) Anmeldenummer: 24169711.9
(22) Anmeldetag: 11.04.2024
(51) Int. Cl.: G06Q 10/04, G06Q 50/06

(54) **PREISOPTIMIERTE LEISTUNGSREGELUNG VON WÄRMEPUMPEN**

(30) Priorität: 11.04.2023 DE 102023109029
(71) Anmelder: Vaillant GmbH, 42859 Remscheid NRW (DE)
(72) Erfinder: Langer, Jens, 42349 Wuppertal (DE)
(74) Vertreter: Popp, Carsten

(57) **Zusammenfassung**

Verfahren zum Betrieb eines Systems von Energieverbrauchern, die einem Anreizsystem von Energielieferern unterworfen sind, wobei das Anreizsystem eine zeitlich variable Anreizgröße mit Anreizwerten aufweist, und der Energie- und Leistungsbedarf des Systems von Energieverbrauchern innerhalb eines Bezugszeitfensters bekannt ist, gekennzeichnet durch die Schritte 1) Ermittlung von Zeitfenstern mit dem höchsten Anreiz, bei dem der Energieverbraucher mit der minimal möglichen Leistung betrieben werden kann, und Belegung dieser Zeitfenster mit einem Leistungsplan, 2) Ermittlung der Energiemenge des prognostizierten Energiebedarfs und Ermittlung des Restenergiebedarfs, 3) Prüfung, ob der Restenergiebedarf einen positiven oder negativen Wert aufweist oder Null ist, 4) wenn der Restenergiebedarf einen positiven Wert aufweist, Ermittlung, ob weitere Zeitfenster mit dem höchsten Anreizwert bestehen, soweit vorhanden Belegung dieser Zeitfenster zur Deckung des Restenergiebedarfs bis zur jeweils maximal möglichen Leistung des Energieverbrauchers, danach Ermittlung, welche Zeitfenster mit dem nächstniedrigeren Anreizwert bestehen und Belegung dieser Zeitfenster in dem Umfang und solange, wie der verbleibende Restenergiebedarf noch ungedeckt ist, 5) wenn und sobald der Restenergiebedarf einen negativen Wert oder Null aufweist, Fertigstellung des Leistungsverbrauchsplans und Erstellung des Leistungsverbrauchsplans mit zeitlichem Verlauf des Leistungssollwerts, 6) Regelung des Energieverbrauchers entsprechend des zeitlichen Verlaufs des Leistungssollwerts.

## Beschreibung

Die Erfindung betrifft die Optimierung der Laufzeit und der Verbrauchsleistung eines Energieverbrauchers auf Basis einer zeitlich variablen und von der Verbrauchsleistung abhängigen Anreizgröße. Die variable Anreizgröße kann dabei z.B. eine Energiepreisinformation, eine Information über den Anteil erneuerbarer Energien an der verbrauchten Energie oder eine mit dem Energieverbrauch einhergehenden CO2-Ausstoß sein.

Derartige Systeme finden Anwendung bei Lastenverteilungssystemen, die der Verwaltung von Energieverteilungsnetzen dienen und werden auch als Lastmanagementsysteme bezeichnet. Für solche Energieverteilungsnetze sind intelligente elektrische Stromzähler, sogenannte Smart Meter bekannt, die den Stromverbrauch überwachen und versuchen, Anreize für einen Stromverbrauch zu setzen, wenn ein besonders günstiger Stromtarif angewandt wird.

Die US 9,946,285 B2 betrifft ein Energieverteilungssystem zum Betreiben von wenigstens einem Energiespeichersystem, in der Regel aber einer Vielzahl von Energiespeichern, mit dem der Energieverbrauch mit der Energieversorgung ausgeglichen werden kann. Hierzu wird :
- zunächst die Leistungsflexibilität bestimmt, indem eine obere zeitvariable Leistungsfunktion gebildet wird,
- sodann werden Energieverbrauchsdaten mit diskreten Zeitschritten für ein Zeitfenster für das System prognostiziert,
- dann wird daraus der Bedarf an Energie für eine vorgegebene Zeitspanne ermittelt,
- dann wird eine obere zeitvariable Energie-Funktion für die Bedarfsvorhersage erzeugt, welche das alleroberste Limit für die Energieversorgung des Systems definiert,
- dann wird eine untere zeitvariable Energie-Funktion für die Bedarfsvorhersage erzeugt, welche das allerunterste Limit für die Energieversorgung des Systems definiert,
- dann wird das System mit Energie in einem Bereich versorgt, der zwischen den Limits der oberen Energie-Funktion und der unteren Energie-Funktion gebildet wird.

Ein ähnliches System wird von der EP 3109 965 A1 beschrieben. Auch die US 2006/0276938 A1 beschreibt ein optimiertes Energie-Verwaltungssystem ähnlicher Art.

Die DE 10 2011 008 808 A1 beschreibt ein Kühlaggregat, welches unmittelbar oder mittelbar von einem oder mehreren Energieerzeugern oder Energiemanagement-Einheiten energiebezogene oder leistungsbezogene Daten empfängt und die Leistungsaufnahme eingestellt oder gemeldet wird. Es ist auch vorgesehen, bei Energieerzeugern oder Energiemanagement-Zentralen anzufragen, zu welchen Konditionen Energie zur Verfügung steht, die prognostizierte Leistungsaufnahme kann dann bei der Energieerzeugung entsprechend eingeplant werden. So können Angebote mit niedrigen Energiekosten oder Energieerzeugungsarten mit niedrigem CO₂-Ausstoß berücksichtigt werden. Das Gerät verfügt hierzu über eine Prognoseeinheit und kommuniziert mit anderen Geräten und dem Energieerzeuger drahtgebunden oder drahtlos.

Die DE 10 2016 123 424 A1 beschreibt ein Verfahren zur Verteilung von Energie in einem Hausenergieversorgungssystem, einem sogenannten HEMS. Hierbei wird im ersten Schritt durch eine Zentraleinheit eine Information generiert, die eine erste Preisinformation und eine erste Energiemengeninformation für einen vorbestimmten Zeitraum beinhaltet, wobei im zweiten Schritt die Zentraleinheit dem Energieverbraucher die Information übermittelt, wobei im dritten Schritt der Energieverbraucher unter Berücksichtigung der Information eine Bedarfsinformation ermittelt, die eine angeforderte Energiemenge für den vorbestimmten Zeitraum beinhaltet, wobei im vierten Schritt der Energieverbraucher der Zentraleinheit die Bedarfsinformation und eine zweite Preisinformation übermittelt, wobei im fünften Schritt die Zentraleinheit überprüft, ob zu einem beliebigen Zeitpunkt die aus den übermittelten Bedarfsinformationen ermittelte, gesamte angeforderte Energiemenge die zu diesem Zeitpunkt zur Verfügung stehende Energiemenge überschreitet, wobei im sechsten Schritt, die Zentraleinheit dem Energieverbraucher eine Bestätigungsinformation übermittelt.

Weitere Lastverwaltungssysteme werden in der DE 10 2019 215 609 A1 und der EP 3 820 011 A1 beschrieben. Letztere hat das Ziel, ein elektrisches Kraftfahrzeug möglichst kostengünstig zu beladen.

Die Erfindung ermöglicht, einen in die Zukunft prognostizierten Energiebedarf eines Energieverbrauchssystems auf Basis einer in die Zukunft prognostizierten Anreizgröße so in eine zeitliche Leistungsverbrauchskurve umzurechnen und zu optimieren, dass
- der prognostizierte Energiebedarf gedeckt wird,
- und dieser Energiebedarf entsprechend der Anreizgröße optimiert gedeckt wird, also z.B. der Energiebedarf mit minimalen Energiekosten oder mit maximal möglichem Anteil erneuerbarer Energien gedeckt wird.

Damit wird ein Regelungsverfahren einer Wärmepumpe betrieben, die ihre elektrische Energie aus verschiedenen Quellen zu unterschiedlichen Preisen und zu verschiedenen Zeiten bezieht, wobei sie sich die zur Verfügung gestellte Energie mit anderen Verbrauchern teilen muss.

Üblicherweise wird der Energiebedarf zuvor ermittelt. Beispielsweise kann hierfür ein Verfahren zur Regelung einer elektrischen Wärmepumpe zur Beheizung eines Gebäudes mittels eines Leistungsplans genutzt werden, bei dem nacheinander die folgenden Schritte durchgeführt werden:
a) Auswertung von Daten, die von der Wärmepumpe und der zugehörigen Regelungstechnik an eine Datenerfassungsinstanz übermittelt wurden,
b) Erfassen von historischen Wetterdaten am Standort der Wärmepumpe,
c) Verbindung der gesammelten Zeitreihendaten mittels einer Datenanalyse,
d) Erstellung eines Modells von Wärmeerzeugern und Verbrauchern,
e) Anpassung des Lastmodells an spezifische Eigenschaften von einzelnen Verbrauchern,
f) Prüfung, ob Umstände eine Neuauswertung erfordern,
g) Erstellung eines Leistungsplans aus der Vorhersage des elektrischen Energiebedarfs und Regelung der Wärmepumpe damit.
Des Weiteren wird der Unterschied zwischen gemessenen Raumtemperaturen und der vom Endkunden gewünschten Zieltemperatur betrachtet.

Die Erfindung ermöglicht weiterhin die ermittelte Leistungsverbrauchskurve in einer kontinuierlichen zeitlichen Abfolge als aktuellen Leistungssollwert an den Energieverbraucher weiterzugeben, so dass die Leistung des Energieverbrauchers im zeitlichen Ablauf der ermittelten Leistungsverbrauchskurve folgt. Die Information zu der variablen Anreizgröße liegt dabei als Prognose über einen Zeitraum in der Zukunft vor. Weiterhin liegt dem Optimierer der prognostizierte Energiebedarf vor.

Die Erfindung hat speziell die Optimierung von elektrischen Energieverbrauchern zum Ziel, ist aber generisch auch für andere Energieformen und Energieverbraucher geeignet. Zum besseren Verständnis der Erfindung und der Erfindungsansprüche wird hier beispielhaft speziell auf elektrische Energieverbraucher eingegangen.

Zukünftige elektrische Energiesysteme diversifizieren sich immer mehr bezüglich der Energieerzeugung und des Energieverbrauches. So erhöht sich der Anteil erneuerbarer Energien in den heutigen Stromnetzen immer weiter, was dazu führt, dass die Verfügbarkeit elektrischer Energie in den Netzen immer volatiler wird und somit auch sich volatile, zeitlich variable Strompreise, Anteil erneuerbarer Energien am Strommix und CO₂ Äquivalente (CO₂ Emissionen pro verbrauchter Energieeinheit) ergeben, die z.B. auch von Energieversorgern als Anreizgrößen an die Endkunden weitergegeben werden. Weiterhin haben immer mehr Endkunden selbst stromerzeugende Systeme in Betrieb, so z.B. Photovoltaik-Systeme, die Strom zum Selbstverbrauch erzeugen. Dieser selbst erzeugte und im Hause des Endkunden selbst verbrauchte Strom verändert somit nochmal den rechnerischen Strompreis, den Anteil erneuerbarer Energien oder das COz-Äquivalent für den Endkunden. Es treffen also zeitlich variable Anreizgrößen wie ein zeitlich variabler Strompreis, denn der Strom ist für den Endkunden billiger, wenn die Sonne auf das eigene Photovoltaik-Feld scheint, auf zeitlich flexible Verbraucher, wie z.B. eine Wärmepumpe oder ein Elektroauto.

Vor diesem Hintergrund erscheint es sinnvoll, zeitlich flexible Energieverbraucher (z.B. eine elektrische Wärmepumpe) vor allem zu den Zeiträumen laufen zu lassen, in denen der Strom billig ist, oder z.B. mit einem hohen Anteil erneuerbarer Energie zur Verfügung steht, sowie die Leistung des elektrischen Verbrauchers an die jeweils verfügbare Leistung mit niedrigem Strompreis oder hohem erneuerbaren Anteil anzupassen.

Voraussetzung für die Optimierung der Laufzeiten Leistungsverbräuche des Energieverbrauchers entsprechend der Erfindung ist, dass eine Information über den zukünftigen Energiebedarf vorliegt. Wie ein solcher Energiebedarf prognostiziert werden kann, ist nicht Teil dieser Erfindung. Voraussetzung für die Optimierung entsprechend der Erfindung ist weiterhin, dass eine Information über die gewünschte Anreizgröße als Prognose vorliegt. Hierzu gibt es inzwischen Standards, wie eine solche Prognose als Information für ein Verbrauchssystem dargestellt werden kann. Als Beispiel kann hier eine "Incentive Table" genannt werden, welche als mögliches Datenmodell von der EEBUS Initiative e.V. für die Kodierung der Prognose verschiedener Anreizgrößen vorgeschlagen wird.

Mit der "Incentive Table" liegt ein Datenmodell für die allgemeine, flexible Kodierung der Prognose verschiedener Anreizgrößen wie Strompreise, Anteile erneuerbarer Energien, CO₂-Äquivalente, etc. vor. Bisher fehlen aber Optimierungsverfahren, die die über die "Incentive Table" bereitgestellten Informationen untere Berücksichtigung der spezifischen Betriebsparameter und Einsatzgrenzen des Energieverbrauchssystems optimal für den Betrieb eines Energieverbrauchssystems nutzt und z.B. die Energiekosten in einer bestmöglichen Weise reduziert. Bestehende Verfahren können bisher nur
- auf aktuelle Anreizgrößen spontan reagieren (z.B. eine Verbrauchsleistung erhöhen, wenn aktuell der Strompreis gering ist),
- eine Optimierung der Verbrauchsleistungskurve auf Basis zeitlich variabler Strompreise (z.B. variable Strompreistarife eines Energieversorgers), bei der aber der Strompreis unabhängig von der Verbrauchsleistung ist, durchführen.

Es fehlen bisher Optimierungsverfahren, die
- einen zukünftigen (prognostizierten) Energieverbrauch anhand einer Prognose von Anreizgrößen optimiert,
- bei der Optimierung nicht nur die Abhängigkeit der Anreizgröße von der Zeit (wie z.B. zeitvariable aber von der Leistung unabhängige Stromtarife) beachtet, sondern auch die Abhängigkeit der Anreizgröße von der Bezugsleistung,
- bei der Optimierung Randbedingungen, Betriebsparameter und Einsatzgrenzen des Energieverbrauchers berücksichtigen, wie z.B. minimal und maximal technisch mögliche Leistungsaufnahme des Energieverbrauchers,
- die Optimierung nicht nur "spontan" für den aktuellen Zeitpunkt durchführen, sondern einen optimierten Leistungsverbrauchsplan für einen Zeitraum vom aktuellen Zeitpunkt bis in die Zukunft durchführen,
- den Energieverbraucher entsprechend des optimierten Leistungsverbrauchsplans sowie der spezifischen Betriebsparameter und Einsatzgrenzen des Energieverbrauchers ansteuern und einregeln.

Ein Optimierungsverfahren, welches den Energieverbrauch auf Basis der in einer "incentive Table" kodierten Informationen über die Abhängigkeit der Anreizgröße sowohl von der (zukünftigen) Zeit als auch von der (zukünftigen) Verbrauchsleistung hin optimiert, dabei die spezifischen Betriebsparameter und Einsatzgrenzen des Energieverbrauchers sowie in einen optimierten Leistungsverbrauchsplan übersetzt, fehlt bisher.

Die Erfindung beschreibt ein Optimierungsverfahren, welches einen prognostizierten Energiebedarf eines Energieverbrauchers unter Berücksichtigung der individuellen Betriebsparameter und Einsatzgrenzen des Energieverbrauchers anhand von Anreizgrößen einer "incentive Table" optimiert, wobei dieses Optimierungsverfahren einen Leistungsverbrauchsplan (Sollleistung über die Zeit) errechnet, welcher anschließend in eine zeitliche Abfolge von Leistungssollwerten umgerechnet wird, welche als aktuelle Leistungssollwerte an den Energieverbraucher weitergegeben werden. Der Energieverbraucher wird dann dem sich über die Zeit verändernden Leistungssollwert entsprechend seine Verbrauchsleistung über die Zeit einstellen.

Der vom Optimierungsalgorithmus erzeugte Leistungsverbrauchsplan soll dabei folgende Bedingungen erfüllen:
- Sicherstellung, dass der prognostizierte Energiebedarf des Energieverbrauchers innerhalb des definierten Zeitraums der Energiebedarfsprognose gedeckt wird.
- Sicherstellung, dass die energetische Leistung primär in den Zeiten und in den Leistungsbändern bezogen wird, wenn die Energie entsprechend der "incentive Table" bezüglich einer der gewählten Anreizgrößen gerade besonders "günstig" ist.
- Sicherstellung, dass die Randbedingungen, Betriebsparameter und Einsatzgrenzen des Energieverbrauchers wie minimale und maximale Leistungsaufnahmen sowie mögliche Leistungsstufen beachtet werden, der Energieverbraucher also nicht mit einer Zielleistung angesprochen wird, die außerhalb seiner Betriebsgrenzen oder Einsatzgrenzen liegt.
- Sicherstellung, dass der Leistungsverbrauchsplan so in einen jeweils aktuellen Solleistungswert für den Energieverbraucher umgesetzt und an den Energieverbraucher weitergegeben wird, dass der Energieverbraucher mit seiner Verbrauchsleistung dem Leistungsverbrauchsplan folgt.

Die Aufgabe der Erfindung ist daher, einen Leistungsverbrauchsplan zu erstellen, der den oben angeführten Ansprüchen entspricht.

Die Erfindung löst die Aufgabe durch ein Verfahren zum Betrieb eines Systems von Energieverbrauchern, die einem Anreizsystem von Energielieferern unterworfen sind, wobei das Anreizsystem eine zeitlich sowie auch vom Leistungsverbrauch abhängige variable Anreizgröße mit Anreizwerten aufweist, und der Energiebedarf des Systems von Energieverbrauchern innerhalb eines Bezugszeitfensters bekannt ist, gekennzeichnet durch folgende Schritte:
- Ermittlung von Zeitfenstern mit dem höchsten Anreiz, bei dem der Energieverbraucher mit der vom einzelnen Energieverbraucher abhängigen minimal möglichen Leistung betrieben werden kann, und Belegung dieser Zeitfenster mit einem Leistungsplan,
- Ermittlung der Energiemenge des prognostizierten Energiebedarfs und Ermittlung des Restenergiebedarfs,
- Prüfung, ob der Restenergiebedarf einen positiven oder negativen Wert aufweist oder Null ist,
- wenn der Restenergiebedarf einen positiven Wert aufweist, Ermittlung, ob weitere Zeitfenster mit dem höchsten Anreizwert bestehen, soweit vorhanden Belegung dieser Zeitfenster zur Deckung des Restenergiebedarfs mit Leistungswerten, welche mögliche einzelne Einsatzgrenzen oder Leistungsstufen des Energieverbrauchers beachten, bis zur jeweils maximal möglichen Leistung des Energieverbrauchers, danach Ermittlung, welche Zeitfenster mit dem nächstniedrigeren Anreizwert bestehen und Belegung dieser Zeitfenster in dem Umfang und solange, wie der verbleibende Restenergiebedarf noch ungedeckt ist,
- wenn und sobald der Restenergiebedarf einen negativen Wert oder Null aufweist, Fertigstellung des Leistungsverbrauchsplans und Erstellung des Leistungsverbrauchsplans mit zeitlichem Verlauf des Leistungssollwerts,
- Regelung des Leistungsverbrauchs des Energieverbrauchers entsprechend des zeitlichen Verlaufs des Leistungssollwerts.

Die Erfindung wird anhand von Beispielen in den Fig. 1 bis 4a-d näher erläutert.
Fig. 1 zeigt eine reale Incentive Table als Beispiel eines variablen Strompreises,
Fig. 2 zeigt eine idealisierte Incentive Table
Fig. 3 zeigt einen Leistungsverlaufsplan für einen Verbraucher,
Fig. 4a-4d zeigen die einzelnen Schritte zeigen den auf den Verbraucher abgestimmten Leistungsverbrauchsplan.

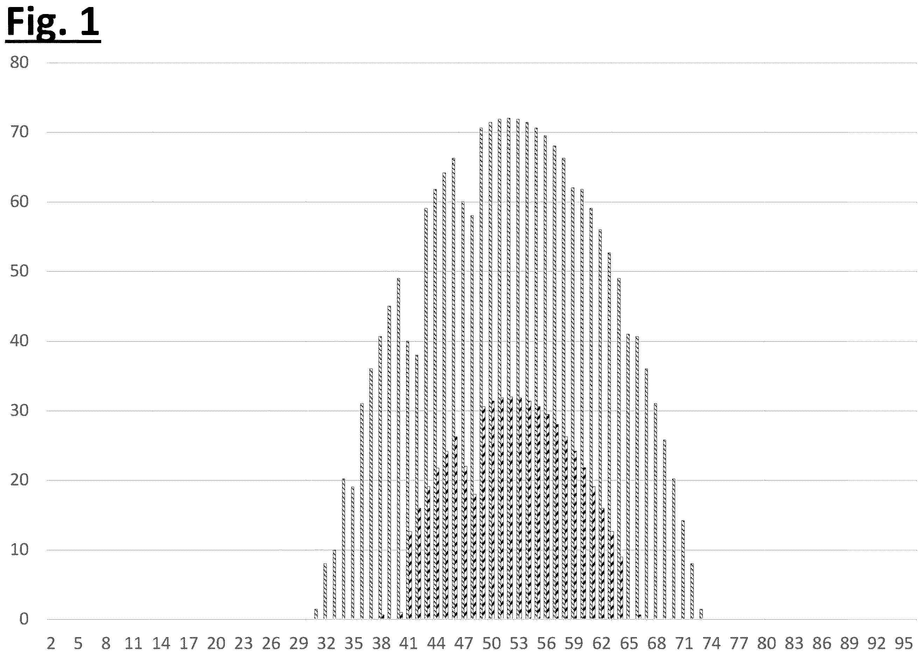

Da die vorliegende Erfindung dieses Datenmodell "incentive Table" als Quelle der Anreizgrößen nutzt, soll deren Aufbau hier anhand von Fig.1 kurz erläutert werden. Das vom EEBUS e.V. vorgeschlagene Datenmodell "incentive Table" ermöglicht es, eine Prognose z.B. des Strompreises, aber auch anderer Anreizgrößen wie z.B. Anteil erneuerbarer Energien, etc. über die nächsten Stunden und Tage abhängig von der Stromverbrauchsleistung zu kodieren. Im Beispiel wird der zukünftige Strompreis über die nächsten 24 Stunden in einem Raster von 15 Minuten (= 96 Zeiträume) in Abhängigkeit von der beziehbaren elektrischen Verbrauchsleistung dargestellt. Diese Kodierungsform ermöglicht es, prognostizierte Erträge eines Photovoltaik-Systems (PV-Systems) in sich daraus ergebenden Stromkosten darzustellen.

Der Strompreis wird dabei als Wert kodiert. Hierbei bedeuten:
- Weißer Hintergrund: Kosten des Stromes bei Netzbezug, hier in den Nachtstunden, wenn keine PV-Energie zur Verfügung steht, Kosten = 29 ct/kWh
- Feld A: Kosten für selbst erzeugten PV-Strom, diese rechnerischen Kosten ergeben sich daraus, dass selbst erzeugter und selbst wieder verbrauchter PV-Strom nicht in das Netz eingespeist wird und somit auch nicht vom Energieversorger vergütet wird. Der Verbrauch von selbst erzeugtem PV-Strom erzeugt also auch rechnerische Kosten für den Endkunden, da er diesen PV-Strom nicht an seinen Energieversorger verkaufen kann. Diese sind aber geringer als für den aus dem Netz bezogenen Strom, weshalb es für den Endkunden günstig ist, selbst erzeugten Strom selbst zu verbrauchen. Hier: Kosten = 11 ct/kWh
- Feld B: Kosten für PV-Strom, der zwar selbst erzeugt werden kann, aber nicht eingespeist werden darf, der somit nur zum Eigenverbrauch zur Verfügung steht. In einigen Ländern darf ein PV-Systeme-Betreiber nur einen gewissen Anteil des PV-Stroms einspeisen und somit seinem Energieversorger verkaufen. In Deutschland sind dies z.B. 70% der installierten Nominalleistung des PV-Systems. Somit ergibt sich für PV-Leistungen, die zwar erzeugt und selbst verbraucht, aber nicht eingespeist werden dürfen, ein rechnerischer Strompreis von 0 ct/kWh.

In der Darstellung der realen "Incentive Table" wird deutlich, dass ein Strompreis nicht nur von der Tageszeit, sondern auch von der Verbrauchsleistung abhängig ist und über den Tag deutlich schwanken kann. Bei höherer Verbrauchsleistung ergeben sich z.B. höhere Stromkosten, da die Verbrauchsleistung z.B. höher ist als die zurzeit verfügbare PV-Leistung und somit anteilig auch teurerer Netzstrom bezogen werden muss.

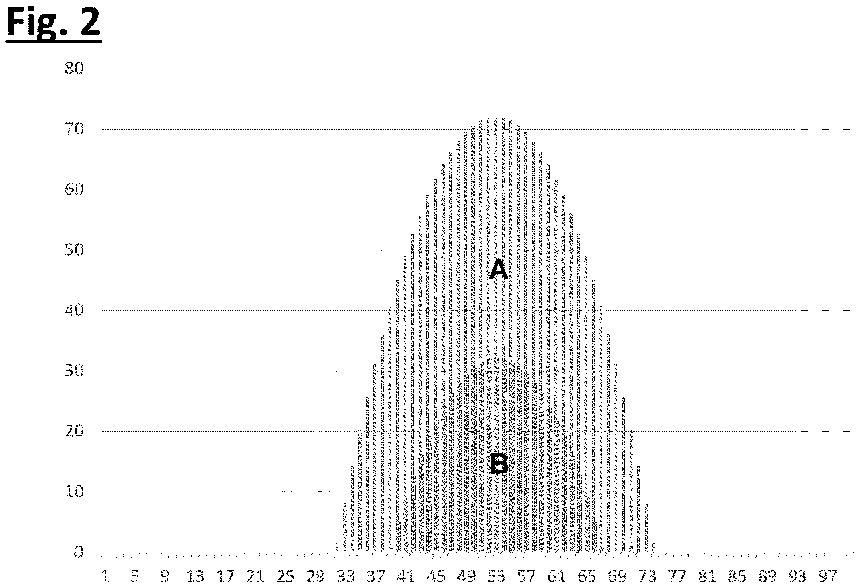

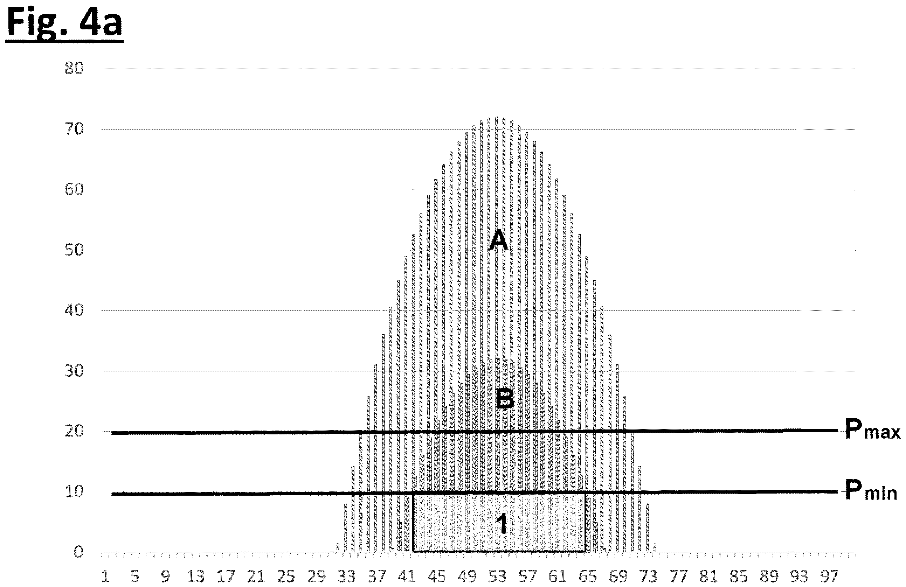

Zur besseren Darstellung zeigt Fig.2 eine idealisierte "Incentive Table", anhand derer im Folgenden in den Fig. 4a bis 4d gezeigt wird, wie der Leistungsverbrauchsplan Schritt für Schritt erzeugt wird.

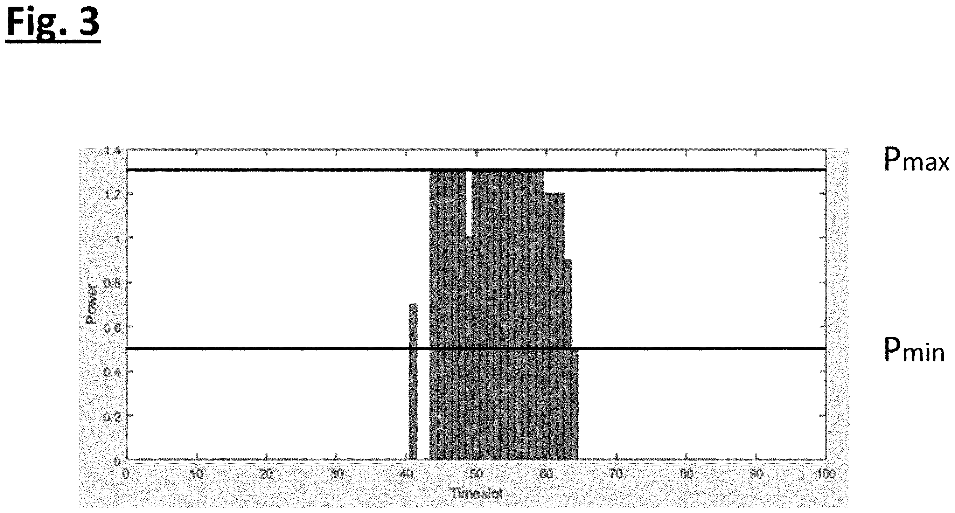

Fig.3 zeigt einen Leistungsverlaufsplan für einen Verbraucher, dessen Leistung zwischen einer Minimalleistung Pₘᵢₙ und einer Maximalleistung Pₘₐₓ liegt, dies kann beispielsweise eine Wärmepumpe sein, die einen geregelten Verdichter, einen sogenannten Inverter mit einem großen Regelungsbereich, besitzt.

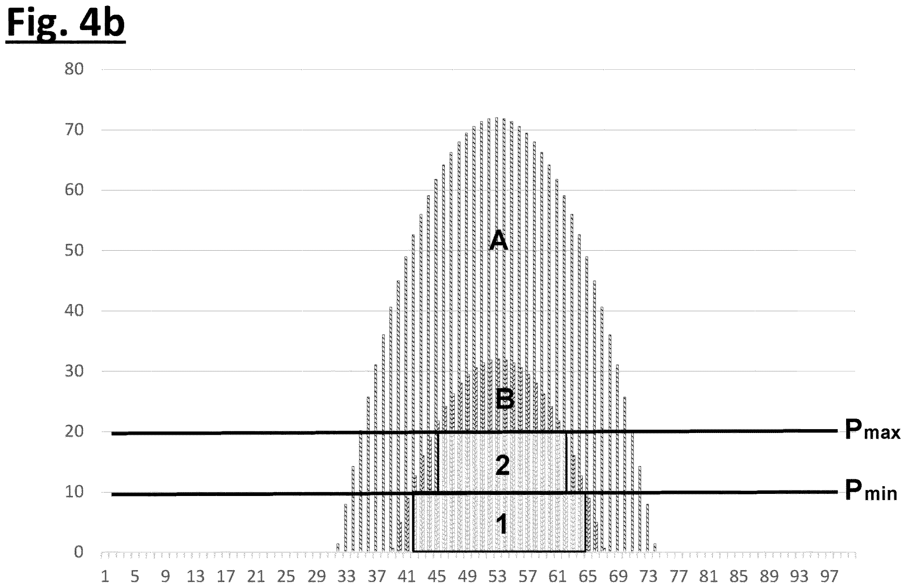

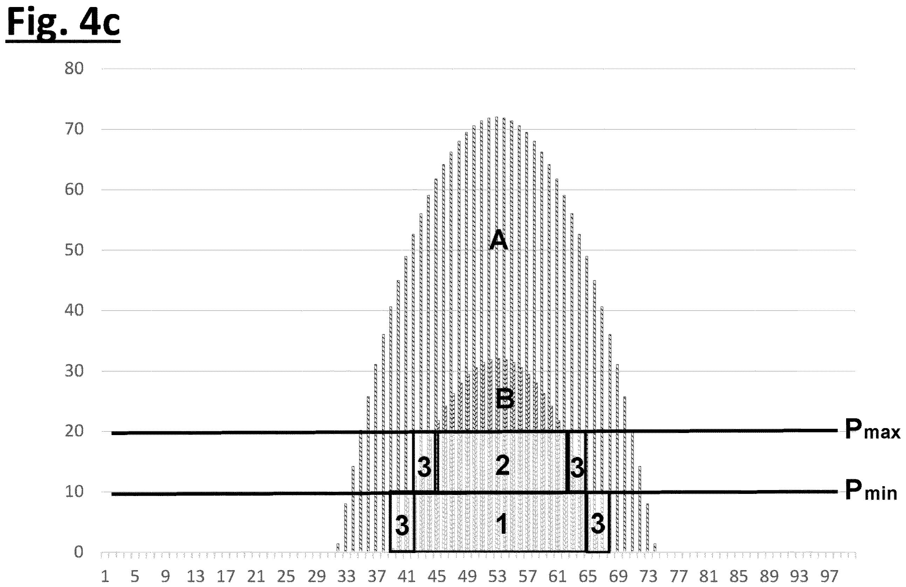

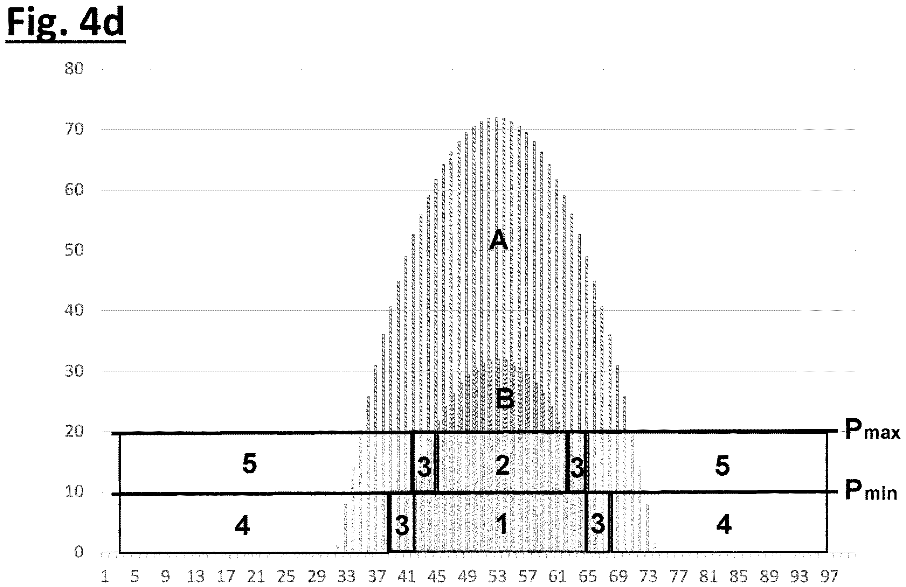

Fig.4 zeigt einen Leistungsverbrauchsplan. Dabei wird zunächst Feld 1 belegt, was in Fig. 4a gezeigt wird. Feld 1 kann vollständig mit dem günstigsten Strom, also dem mit dem höchsten Anreiz, das sind hier die niedrigsten Kosten, versorgt werden. Danach wird Feld 2 belegt, was in Fig. 4b gezeigt wird, beide Felder 1 und 2 können vollständig mit dem günstigsten Strom, also dem mit dem höchsten Anreiz, das sind hier die niedrigsten Kosten, versorgt werden. In praktischen realen Incentive Tables können das auch mehrere Felder sein. Die Versorgung könnte etwa durch eine eigene PV-Anlage erfolgen.

Danach werden die Felder 3 belegt, was in Fig. 4c gezeigt wird, diese können nur teilweise mit Strom der höchsten Anreizstufe versorgt werden und es muss Strom der zweithöchsten Anreizstufe aufgefüllt werden. In den Feldern 4 und 5 muss der gesamte Bedarf aus Strom der zweithöchsten Anreizstufe gedeckt werden, was in Fig. 4d gezeigt wird. Falls auch dies nicht reichen sollte, was im Beispiel aber nicht der Fall ist, müsste die dritthöchste Anreizstufe beansprucht werden, das wäre normaler Netzstrom. Das System ist auf beliebige Anreizstufen anwendbar.

Ein Energieverbrauchssystem, welches die Information über variable Anreizgrößen wie variable Strompreise für die Optimierung des Energiebedarfs in Bezug auf die Anreizgröße, etwa zur die Minimierung der Stromkosten, nutzen will, benötigt ein Optimierungsverfahren, um den prognostizierten Energieverbrauch optimal unter Berücksichtigung der individuellen Betriebsparameter und Einsatzgrenzen des Energieverbrauchers an die verfügbare Anreizgröße anzupassen. Die Erfindung beschreibt ein solches Optimierungsverfahren.

## Patentansprüche

1. Verfahren zum Betrieb eines Systems von Energieverbrauchern, die einem Anreizsystem von Energielieferern unterworfen sind, wobei das Anreizsystem eine zeitlich variable Anreizgröße mit Anreizwerten aufweist, und der Energie- und Leistungsbedarf des Systems von Energieverbrauchern innerhalb eines Bezugszeitfensters bekannt ist, **gekennzeichnet durch** folgende Schritte:
- Ermittlung von Zeitfenstern mit dem höchsten Anreiz, bei dem der Energieverbraucher mit der vom einzelnen Energieverbraucher abhängigen minimal möglichen Leistung betrieben werden kann, und Belegung dieser Zeitfenster mit einem Leistungsplan,
- Ermittlung der Energiemenge des prognostizierten Energiebedarfs und Ermittlung des Restenergiebedarfs,
- Prüfung, ob der Restenergiebedarf einen positiven oder negativen Wert aufweist oder Null ist,
- wenn der Restenergiebedarf einen positiven Wert aufweist, Ermittlung, ob weitere Zeitfenster mit dem höchsten Anreizwert bestehen, soweit vorhanden Belegung dieser Zeitfenster zur Deckung des Restenergiebedarfs mit Leistungswerten, welche mögliche einzelne Einsatzgrenzen oder Leistungsstufen des Energieverbrauchers beachten, bis zur jeweils maximal möglichen Leistung des Energieverbrauchers, danach Ermittlung, welche Zeitfenster mit dem nächstniedrigeren Anreizwert bestehen und Belegung dieser Zeitfenster in dem Umfang und solange, wie der verbleibende Restenergiebedarf noch ungedeckt ist,
- wenn und sobald der Restenergiebedarf einen negativen Wert oder Null aufweist, Fertigstellung des Leistungsverbrauchsplans und Erstellung eines Leistungsverbrauchsplans mit zeitlichem Verlauf des Leistungssollwerts,
- Regelung des Leistungsverbrauchs des Energieverbrauchers entsprechend des zeitlichen Verlaufs des Leistungssollwerts.
